Europäisches Patentamt

European Patent Office

Office européen des brevets

(19)

(11) Numéro de publication : **0 370 837 B1**

(12) **FASCICULE DE BREVET EUROPEEN**

(45) Date de publication du fascicule du brevet :
**19.05.93 Bulletin 93/20**

(51) Int. Cl.⁵ : **C04B 35/56, H01T 13/52**

(21) Numéro de dépôt : **89402746.5**

(22) Date de dépôt : **04.10.89**

(54) Composition en céramique semiconductrice et son application dans la fabrication des bougies d'allumage.

(30) Priorité : **21.11.88 FR 8815117**

(43) Date de publication de la demande :
**30.05.90 Bulletin 90/22**

(45) Mention de la délivrance du brevet :
**19.05.93 Bulletin 93/20**

(84) Etats contractants désignés :
**DE FR GB IT**

(56) Documents cités :
**FR-A- 2 269 789**
**FR-A- 2 346 881**
**GB-A- 2 136 874**
**US-A- 3 088 921**
**US-A- 3 376 367**
**US-A- 3 558 959**

(56) Documents cités :
**CHEMICAL ABSTRACTS, vol. 100, no. 2, 9 janvier 1984, page 303, résumé no. 11658e, Columbus, Ohio, US; & JP-A-58 125 666 (SHOWA DENKO K.K.) 26-07-1983**

(73) Titulaire : **EYQUEM, Société dite:**
**1 rue Lavoisier**
**F-92002 Nanterre (FR)**

(72) Inventeur : **Wapler, Simone**
**13 bis, rue de l'Eglise**
**F-92200 Neuilly/Seine (FR)**
Inventeur : **Balland, Patrick**
**70, rue du Général Carrey de Bellemare**
**F-92500 Rueil Malmaison (FR)**

(74) Mandataire : **Polus, Camille et al**
**c/o Cabinet Lavoix 2, Place d'Estienne d'Orves**
**F-75441 Paris Cedex 09 (FR)**

EP 0 370 837 B1

Jouve, 18, rue Saint-Denis, 75001 PARIS

## Description

La présente invention concerne une composition en céramique semi-conductrice et son application dans la fabrication des bougies d'allumage du type haute énergie-basse tension (HE-BT).

Les bougies d'allumage HE-BT, utilisées notamment dans les turbines à gaz et les moteurs à réaction, sont du type capable de fournir une énergie de quelques dixièmes de joules à plusieurs joules sous une tension de 2 à 3 kV, alors que la tension de fonctionnement des bougies du type haute énergie-haute tension (HE-HT) est de l'ordre de 20 kV. Les bougies du type HE-BT comprennent un matériau semi-conducteur entre les électrodes (au lieu d'un isolant pour les bougies HE-HT), de sorte qu'une tension suffisante aux bornes des électrodes conduit d'abord au claquage du semi-conducteur provoquant une ionisation suffisante à l'établissement de l'étincelle entre les électrodes.

Les avantages de la bougie HE-BT consistant notamment en son fonctionnement peu dépendant des conditions de la chambre de combustion et nécessitant une chaîne d'allumage de moindre importance, ont conduit au développement de semi-conducteurs en céramique à base de carbure de silicium, décrits en particulier dans US-A-3376367, US-A-3558959, FR-A-2 269 789 et FR-A-2 346 881.

Toutefois, si les sytèmes BT ne se sont pas généralisés sur les moteurs, c'est que la durée de vie d'une bougie semi-conducteur devient très réduite dans les cas d'utilisation sévère, c'est-à-dire à haut niveau de pression et de température. Alors que pour les bougies HT c'est l'usure des électrodes qui conditionne la durée de vie, pour les bougies BT c'est l'usure du semi-conducteur, qui intervient avant l'érosion notable des électrodes. Il était donc souhaitable d'améliorer la durée de vie des semi-conducteurs utilisables dans les bougies HE-BT.

La Demanderesse a établi que c'est surtout dans la phase de commutation du semi-conducteur que se produit la dégradation du matériau le formant, c'est-à-dire avant la phase d'étincelle, et a réussi à limiter l'énergie de pré-ionisation du matériau par l'adjonction d'éléments thermoémissifs. Elle a ainsi mis au point une composition en céramique semi-conductrice comportant d'excellentes qualités de décharge et une durée de vie améliorée, qui est utilisable en particulier pour les bougies d'allumage de turbines à gaz ou moteurs à réaction.

L'invention a donc pour objet une composition en céramique semi-conductrice obtenue à partir (a) une composition de base comprenant 40 à 80% en poids d'un semi-conducteur qui est un carbure de silicium ou de bore, 5 à 40% en poids d'un liant ou d'un mélange de liants choisis parmi l'alumine, l'oxyde de béryllium, l'oxyde de zirconium, l'oxyde de magnésium, la silice et le nitrure de silicium, et 0 à 40% d'un fondant ou d'un mélange de fondants choisis parmi les carbonates et oxydes alcalino-terreux, les oxydes de terres rares et les silicates de métaux, caractérisée par l'addition de (b) 5 à 40% en poids, par rapport à la composition de base (a) d'un dopant thermoémissif choisi parmi le titane, le titanate de baryum, le tungstène et le borure de lanthane.

Le liant est une poudre isolante à haut point de fusion, constituant le support du semi-conducteur.

Le fondant, qui n'est pas indispensable dans cette composition et sert essentiellement à réduire la température de cuisson, est avantageusement un silicate ou un mélange de silicates notamment de magnésium et d'aluminium tels que la bentonite, le kaolin, le talc, etc, mais également des carbonates alcalino-terreux tels que la dolomie, etc. On peut utiliser en particulier de 10 à 30% en poids de fondant(s) dans la composition de base (a).

Le dopant thermoémissif qui est un composant essentiel selon l'invention est avantageusement du titanate de baryum ou du borure de lanthane (LaB$_6$) qui, outre leur fort pouvoir émissif, ne dégradent pas le composant semi-conducteur.

La mise en oeuvre de la composition de céramique selon l'invention -malaxage, pressage et cuissons'effectue de manière traditionnelle selon les matériaux utilisés.

Les exemples suivants illustrent l'invention.

## EXEMPLE 1

a) Préparation de la composition de céramique.

On prépare une composition de base ayant la formulation suivante (% en masse) :

```
carbure de silicium (2 à 25 µm) ........   60

bentonite .................................    5

kaolin ....................................   10

talc ......................................    5

dolomie ...................................   10

alumine (3,5 à 4 µm) ......................   10
```

On malaxe 1 kg de cette composition dans un mélangeur à boulets pendant 2 h. On ajoute 65 g d'eau puis 100 g (10%) titanate de baryum et on malaxe pendant 1/2 h. Le mélange obtenu est passé sur un tamis de 630 µm.
b) Pressage et cuisson.
On presse à 300 bars (30 MPa) la composition de céramique obtenue ci-dessus en cylindres de 10,5 mm de diamètre et 30 mm de haut. On dispose les cylindres dans un moule en céramique, on les étuve à 80°C pendant 2 heures, puis on les cuit à 1630°C pendant 27 h.

EXEMPLE 2

On utilise la même formulation que dans l'exemple 1, sauf l'élément thermoémissif qui est de la poudre de titane (granulométrie 3 µm) au lieu du titanate de baryum. Après pressage en cylindres, on effectue la cuisson à 1600°C pendant 48 heures.

EXEMPLE 3

On opère exactement comme dans l'exemple 1, mais en utilisant du borure de lanthane au lieu du titanate de baryum.
Les cylindres de semi-conducteur en céramique ainsi obtenus ont été usinés, montés dans des bougies soumises aux essais suivants pour déterminer leurs caractéristiques en comparaison avec des bougies "A" de même diamètre utile, contenant des semi-conducteurs en céramique à base de carbure de silicium, qui sont connues pour avoir la meilleure longévité. Les essais ont été réalisés sous une tension de 2 kV.

I. ENERGIE DE COMMUTATION SOUS 30 BARS (3 MPa)

|                    | A        | EXEMPLES 1 et 3 |
|--------------------|----------|-----------------|
| Energie (mJ)       | 10-40    | 2-15            |
| Courant maxi (A)   | 15-35    | 1,5-15          |
| Délai (µs)         | 1-1,5    | 0,5-1,2         |

II. ENERGIE DE COMMUTATION EN PRESENCE D'UNE GOUTTE DE KEROSENE

|  | A | EXEMPLES 1 et 3 |
|---|---|---|
| Energie (mJ) | 150-500 | 100-200 |
| Courant maxi (A) | 8-30 | 1-5 |
| Délai (µs) | 7-35 | 30-90 |

Cet essai est représentatif d'une bougie noyée.

III. VITESSE D'EROSION

a) En essai goutte à goutte (carburant mal pulvérisé)

|  | A | EXEMPLES 1 et 3 |
|---|---|---|
| nombre d'étincelles pour 1 mm de profondeur d'usure | 75 000 à 250 000 | 150 000 à 300 000 |

b) En essai sous une pression de 30 bars (3 MPa) à 500°C

|  | A | EXEMPLES 1 et 3 |
|---|---|---|
| nombre d'étincelles pour 2,5 mm de profondeur d'usure | 300 000 à 400 000 | 400 000 à 600 000 |

Les résultats montrent que la tenue du matériau selon l'invention et les caractéristiques électriques de la décharge restent excellentes :
- en température (jusqu'à environ 950°C)
- en pression 30 bars (3 MPa), et
- lorsque la bougie est en présence de carburant mal pulvérisé.

**Revendications**

1. Composition en céramique semi-conductrice obtenue à partir (a) une composition de base comprenant

4

40 à 80% en poids d'un semi-conducteur qui est un carbure de silicium ou de bore, 5 à 40% en poids d'un liant ou d'un mélange de liants choisis parmi l'alumine, l'oxyde de béryllium, l'oxyde de zirconium, l'oxyde de magnésium, la silice et le nitrure de silicium, et 0 à 40% d'un fondant ou d'un mélange de fondants choisis parmi les carbonates et oxydes alcalino-terreux, les oxydes de terres rares et les silicates de métaux, caractérisée par l'addition de (b) 5 à 40% en poids, par rapport à la composition de base (a) d'un dopant thermoémissif choisi parmi le titane, le titanate de baryum, le tungstène et le borure de lanthane.

2. Composition de céramique selon la revendication 1, caractérisée en ce que le liant est l'alumine.

3. Composition de céramique selon l'une des revendications 1 ou 2, caractérisée en ce que le fondant comprend un silicate ou un mélange de silicates.

4. Composition de céramique selon la revendication 3, caractérisée en ce que les silicates comprennent la bentonite, le kaolin et le talc.

5. Composition de céramique selon l'une quelconque des revendications 1 à 4, caractérisée en ce que le(s) fondant(s) représente(nt) 10 à 30% en poids de la composition de base (a).

6. Composition en céramique selon l'une quelconque des revendications 1 à 5, caractérisée en ce que le dopant thermoémissif est le titanate de baryum.

7. Composition en céramique selon l'une quelconque des revendications 1 à 5, caractérisée en ce que le dopant thermoémissif est le borure de lanthane ($LaB_6$).

8. Bougie d'allumage fabriquée à partir d'une composition en céramique selon l'une quelconque des revendications 1 à 7.


## Claims

1. A semi-conductive ceramic composition obtained from (a) a basic composition comprising 40 to 80% by weight of a semiconductor which is a silicon or boron carbide, 5 to 40% by weight of a binder or mixture of binders chosen from amongst alumina, beryllium oxide, zirconium oxide, magnesium oxide, silica and silicon nitride, and 0 to 40% of a flux or mixture of fluxes chosen from amongst alkaline-earth carbonates and oxides, rare-earth oxides and metal silicates, characterised by the addition of (b) 5 to 40% by weight, relative to the basic composition (a), of a heat-emitting dopant chosen from amongst titanium, barium titanate, tungsten and lanthanum boride.

2. A ceramic composition according to Claim 1, characterised in that the binder is alumina.

3. A ceramic composition according to one of Claims 1 or 2, characterised in that the flux comprises a silicate or mixture of silicates.

4. A ceramic composition according to Claim 3, characterised in that the silicates comprise bentonite, kaolin and talc.

5. A ceramic composition according to any one of Claims 1 to 4, characterised in that the flux or fluxes represent 10 to 30% by weight of the basic composition (a).

6. A ceramic composition according to any one of Claims 1 to 5, characterised in that the heat-emitting dopant is barium titanate.

7. A ceramic composition according to any one of Claims 1 to 5, characterised in that the heat-emitting dopant is lanthanum boride ($LaB_6$).

8. A spark plug manufactured from a ceramic composition according to any one of Claims 1 to 7.

**Patentansprüche**

1. Halbleitende Keramikzusammensetzung, die erhalten ist aus

   (a) einer Grundzusammensetzung, die 40 bis 80 Gew.-% eines Halbleiters, der ein Silicium- oder ein Borcarbid ist, 5 bis 40 Gew.-% eines Bindemittels oder eines Gemischs von Bindemitteln, die unter Aluminiumoxid, Berylliumoxid, Zirkoniumoxid, Magnesiumoxid, Siliciumdioxid und Siliciumnitrid ausgewählt sind, und 0 bis 40 Gew.-% eines Flußmittels oder eines Gemischs von Flußmitteln enthält, die unter der Erdalkalicarbonaten und Erdalkalioxiden, den Seltenerdmetalloxiden und den Metallsilicaten ausgewählt sind,

   **gekennzeichnet durch** Zusatz von

   (b) 5 bis 40 Gew.-%, bezogen auf die Grundzusammensetzung (a), eines thermoemissiven Dotierungsmittels, das unter Titan, Bariumtitanat, Wolfram und Lanthanborid ausgewählt ist.

2. Keramikzusammensetzung nach Anspruch 1, dadurch gekennzeichnet, daß das Bindemittel Aluminiumoxid ist.

3. Keramikzusammensetzung nach Anspruch 1 oder 2, dadurch gekennzeichnet, daß das Flußmittel ein Silicat oder ein Gemisch von Silicaten enthält.

4. Keramikzusammensetzung nach Anspruch 3, dadurch gekennzeichnet, daß die Silicate Bentonit, Kaolin und Talk umfassen.

5. Keramikzusammensetzung nach einem der Ansprüche 1 bis 4, dadurch gekennzeichnet, daß der Gehalt an Flußmittel(n) in der Grundzusammensetzung (a) 10 bis 30 Gew.-% beträgt.

6. Keramikzusammensetzung nach einem der Ansprüche 1 bis 5, dadurch gekennzeichnet, daß das thermoemissive Dotierungsmittel Bariumtitanat ist.

7. Keramikzusammensetzung nach einem der Ansprüche 1 bis 5, dadurch gekennzeichnet, daß das thermoemissive Dotierungsmittel Lanthanborid ($LaB_6$) ist.

8. Zündkerze, die aus einer Keramikzusammensetzung nach einem der Ansprüche 1 bis 7 hergestellt ist.